# EUROPEAN PATENT SPECIFICATION

(11) **EP 3 725 839 B1**
(45) Date of publication and mention of the grant of the patent: **30.10.2024**
(21) Application number: 18888341.7
(22) Date of filing: 07.12.2018
(51) Int. Cl.: C08L 15/00, B60C 1/00, B60C 15/06, B60C 17/00, C08K 3/013, C08K 3/04, C08K 5/40, C08C 19/22, C08C 19/25, C08C 19/44, C08F 136/06, C08L 7/00

(54) **RUBBER COMPOSITION AND TIRE USING SAME**
KAUTSCHUKZUSAMMENSETZUNG UND REIFEN DAMIT
COMPOSITION DE CAOUTCHOUC ET PNEU L'UTILISANT

(30) Priority: 13.12.2017 JP 2017238977; 24.07.2018 JP 2018138734
(43) Date of publication of application: 21.10.2020
(73) Proprietor: Bridgestone Corporation, Chuo-Ku Tokyo 104-8340 (JP)
(72) Inventor: AMIYA, Motoki, Tokyo 104-8340 (JP); MIYAMOTO, Chiyo, Tokyo 104-8340 (JP)
(74) Representative: Marks & Clerk LLP
(86) International application number: PCT/JP2018/045079
(87) International publication number: WO 2019/117033

(56) References cited:
- EP-A1- 3 640 291
- EP-A2- 0 713 983
- WO-A1-2016/143755
- WO-A1-2016/143755
- WO-A1-2016/143756
- WO-A1-2016/143757
- WO-A1-2017/065304
- CN-A- 104 403 141
- CN-A- 106 589 505
- JP-A- 2009 029 404
- JP-A- 2009 029 404
- JP-A- 2010 155 550
- JP-A- 2017 145 341

## Description

### Technical Field

The present invention relates to a rubber composition capable of suppressing a decrease of elastic modulus at a high temperature and a tire using the rubber composition for a side reinforcing rubber layer and/or a bead filler.

### Background Art

In order to enhance the rigidity of a side wall part in a tire, particularly a run flat tire, a side reinforcing layer using a rubber composition alone or a composite of a rubber composition, a fiber, and the like has been conventionally arranged.

For example, there is disclosed a tire having a side reinforcing rubber layer and/or a bead filler for which a rubber composition prepared by mixing a rubber component, 55 parts by mass or more of a carbon black based on 100 parts by mass of the rubber component, a phenol resin, and a methylene donor is used in order to secure the run flat durability of this run flat tire without degrating the rolling resistance during normal running (see, for example, PTL 1).

JP 2009 029404 A discloses a rubber composition comprising a amine modified polybutadiene, natural rubber, sulfur, carbon black and tetrakis(2-ethylhexyl)thiuram disulfide, which is used in a run flat tire to achieve the riding comfort during the normal running and the durability during the run flat running.

### Citation List

### Patent Literature

PTL 1: JP 2010-155550 A

### Summary of Invention

### Technical Problem

As mentioned above, conventionally, in order to enhance the run flat durability, the rigidity of a vulcanized rubber composition has been increased.

However, as compared with tires other than the run flat tire, since the run flat tire is high in terms of the rigidity of the side wall part, it is poor in the riding comfort, and hence, an improvement is required.

A problem of the present invention is to provide a rubber composition which makes it possible to achieve both of a riding comfort during normal running and durability during run flat running in a run flat tire.

### Solution to Problem

[1] A rubber composition containing a rubber component, a filler, a vulcanizing agent, and a vulcanization accelerator, wherein the rubber component contains 50% by mass or more of a modified conjugated diene-based rubber; the filler contains a carbon black; and the vulcanization accelerator contains a thiuram-based vulcanization accelerator, the carbon black being contained in an amount of 40 to 60 parts by mass, and the thiuram-based vulcanization accelerator being contained in an amount of 2.6 to 5.5 parts by mass based on 100 parts by mass of the rubber component, wherein a mass ratio of the content of the thiuram-based vulcanization accelerator to the content of a sulfur component in the vulcanizing agent [(content of thiuram-based vulcanization accelerator)/(content of sulfur component in vulcanizing agent)] is 0.4 to 1.2, and wherein the modified conjugated diene-based rubber is an amine-modified polybutadiene.
[2] The rubber composition as set forth in [1], wherein the rubber composition does not contain a softener or contains the softener in an amount of 4.0 parts by mass or less based on 100 parts by mass of the rubber component.
[3] The rubber composition as set forth in any one of [1] or [2], wherein the rubber composition further contains a vulcanization accelerator A other than the thiuram-based vulcanization accelerator, and the vulcanization accelerator A is contained in an amount of 1.0 to 5.0 parts by mass based on 100 parts by mass of the rubber component.
[4] The rubber composition as set forth in any one of [1] to [3], wherein a nitrogen adsorption specific surface area of the carbon black is 20 to 90 m²/g.
[5] The rubber composition as set forth in any one of [1] to [4], wherein a modifying group of the amine-modified polybutadiene is a primary amino group.
[6] The rubber composition as set forth in any one of [1] to [5], wherein the rubber composition does not contain a thermosetting resin or contains the thermosetting resin in an amount of 1.0 part by mass or less based on 100 parts by mass of the rubber component.
[7] The rubber composition as set forth in [6], wherein the rubber composition does not contain the thermosetting resin.
[8] A tire using the rubber composition as set forth in any one of [1] to [7] for at least one member selected from a side reinforcing rubber layer and a bead filler.

### Advantageous Effects of Invention

In accordance with the present invention, a rubber composition in which both of the riding comfort during normal running and the durability during the run flat running are favorably achieved can be provided, and furthermore, a run flat tire using the rubber composition for at least one member selected from a side reinforcing rubber layer and a bead filler.

### Brief Description of Drawing

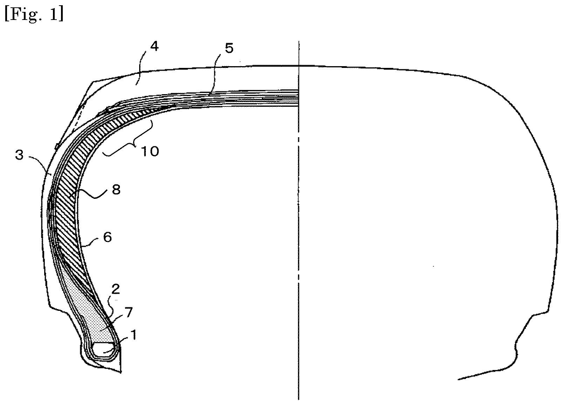

Fig. 1 is a schematic view showing a cross section in one embodiment of the tire of the present invention.

### Description of Embodiment

The rubber composition of the present invention is a rubber composition containing a rubber component, a filler, a vulcanizing agent, and a vulcanization accelerator, wherein the rubber component contains 50% by mass or more of a modified conjugated diene-based rubber; the filler contains a carbon black; and the vulcanization accelerator contains a thiuram-based vulcanization accelerator, the carbon black being contained in an amount of 40 to 60 parts by mass, and the thiuram-based vulcanization accelerator being contained in an amount of 2.6 to 5.5 parts by mass based on 100 parts by mass of the rubber component. The rubber composition of the present invention is an unvulcanized rubber composition.

### (Rubber Component)

The rubber component which is used in the rubber composition of the present invention contains 50% by mass or more of a modified conjugated diene-based rubber. This is to be made for the purposes of increasing an interaction with the carbon black, reducing the heat generation of the side reinforcing rubber for run flat tires (namely, enhancing the low heat generation property), and enhancing the durability during run flat running.

Although the modified conjugated diene-based rubber may be used alone, two or more thereof may be used as well. Although the rubber component may contain the modified conjugated diene-based rubber in an amount of 100% by mass, it preferably contains a natural rubber and/or a non-modified conjugated diene-based rubber in an amount of 50% by mass or less as the balance of the modified conjugated diene-based rubber. From the viewpoint of enhancing rupture characteristics, such as elongation strength and elongation at break, it is preferred to use a combination of a natural rubber and a modified conjugated diene-based rubber. From the viewpoint of more enhancing rupture characteristics, such as elongation strength and elongation at break, a proportion of the natural rubber in the rubber component is preferably 10 to 50% by mass, more preferably 20 to 50% by mass, and especially preferably 30 to 40% by mass. That is, a proportion of the modified conjugated diene-based rubber in the rubber component is preferably 50 to 90% by mass, more preferably 50 to 80% by mass, and especially preferably 60 to 70% by mass. In view of the fact that 50 to 90% by mass of the rubber component is the modified conjugated diene-based rubber, the low heat generation property can be enhanced (the heat generation is reduced), and the run flat durability can be enhanced.

The rubber component may contain a non-diene-based rubber to an extent that the effects of the present invention are not impaired.

From the viewpoint of further increasing the interaction with the carbon black and further reducing the heat generation (further enhancing the low heat generation property) of the side reinforcing rubber for run flat tires, the modified conjugated diene-based rubber in the rubber component according to the present invention is a modified butadiene rubber.

The modified butadiene rubber is preferably a modified butadiene rubber having at least one functional group which interacts with the carbon black. The functional group which interacts with the carbon black is preferably a functional group having an affinity with the carbon black, and specifically, it is preferably at least one selected from the group consisting of a tin-containing functional group, a silicon-containing functional group, and a nitrogen-containing functional group.

In the modified butadiene rubber according to the present invention, from the viewpoint of increasing the elastic modulus at the time of a high temperature to enhance the run flat durability, a vinyl bond content in the micro structure is preferably 20 to 50% by mass, and more preferably 25 to 50% by mass.

In the case where the modified butadiene rubber is a modified butadiene rubber having at least one functional group selected from the group consisting of a tin-containing functional group, a silicon-containing functional group, and a nitrogen-containing functional group, the modified butadiene rubber is preferably one obtained by modifying with a modifying agent, such as a tin-containing compound, a silicon-containing compound, and a nitrogen-containing compound, thereby introducing a tin-containing functional group, a silicon-containing functional group, a nitrogen-containing functional group, or the like.

In modifying a polymerization active site of the butadiene rubber with a modifying agent, a nitrogen-containing compound, a silicon-containing compound, and a tin-containing compound are preferred as the modifying agent to be used. In this case, the nitrogen-containing functional group, the silicon-containing functional group, or the tin-containing functional group can be introduced through a modification reaction.

Such a functional group for modification may be present at any of the polymerization initiation end, the principal chain, and the active polymerization end of the polybutadiene.

The nitrogen-containing compound which can be used as the modifying agent preferably has a substituted or unsubstituted amino group, amide group, imino group, imidazole group, nitrile group, or pyridyl group. Examples of the nitrogen-containing compound which is suitable as the modifying agent include an isocyanate compound, such as diphenylmethane diisocyanate, crude MDI, trimethylhexamethylene diisocyanate, and tolylene diisocyanate; 4-(dimethylamino)benzophenone, 4-(diethylamino)benzophenone, 4-dimethylaminobenzylidene aniline, 4-dimethylaminobenzylidene butylamine, dimethyl imidazolidinone, and N-methylpyrrolidone hexamethyleneimine.

Examples of the silicon-containing compound which can be used as the modifying agent include 3-glycidoxypropyltrimethoxysilane, 3-glycidoxypropyltriethoxysilane, N-(1-methylpropylidene)-3-(triethoxysilyl)-1-propanamine, N-(1,3-dimethylbutylidene)-3-(triethoxysilyl)-1-propanamine, N-(3-triethoxysilylpropyl)-4, 5-dihydroimidazole, 3-methacryloxypropyltrimethoxysilane, 3-isocyanatopropyltriethoxysilane, 3-triethoxysilylpropylsuccinic anhydride, 3-(1-hexamethyleneimino)propyl(triethoxy)silane, (1-hexamethyleneimino)methyl(trimethoxy)silane, 3-diethylaminopropyl(triethoxy)silane, 3-dimethylaminopropyl(triethoxy)silane, 2-(trimethoxysilylethyl)pyridine, 2-(triethoxysilylethyl)pyridine, 2-cyanoethyltriethoxysilane, and tetraethoxysilane. These silicon-containing compounds may be used alone or may be used in combination of two or more thereof. In addition, a partial condensation product of the foregoing silicon-containing compound can also be used.

Furthermore, the modifying agent is also preferably a modifying agent represented by the following formula (I):

R¹ₐZX_{b} (I)

[in the formula, R¹'s are each independently selected from the group consisting of an alkyl group having 1 to 20 carbon atoms, a cycloalkyl group having 3 to 20 carbon atoms, an aryl group having 6 to 20 carbon atoms, and an aralkyl group having 7 to 20 carbon atoms; Z is tin or silicon; X's are each independently chlorine or bromine; and a is 0 to 3, and b is 1 to 4, provided that (a + b) is 4]. The modified butadiene rubber obtained through modification with the modifying agent of the formula (I) has at least one tin-carbon bond or silicon-carbon bond.

Specifically, examples of R¹ in the formula (I) include a methyl group, an ethyl group, a n-butyl group, a neophyl group, a cyclohexyl group, a n-octyl group, and a 2-ethylhexyl group. In addition, specifically, the modifying agent represented by the formula (I) is preferably SnCl₄, R¹SnCl₃, R¹₂SnCl₂, R¹₃SnCl, SiCl₄, R¹SiCl₃, R¹₂SiCl₂, R¹₃SiCl, or the like, with SnCl₄ and SiCl₄ being especially preferred.

Above all, from the viewpoint of achieving reduction in heat generation of the side reinforcing rubber for run flat tires and prolonging the durability life, the modified butadiene rubber is an amine-modified butadiene rubber. That is, from the viewpoint of especially increasing the interaction with the carbon black and especially reducing the heat generation (especially enhancing the low heat generation property) of the side reinforcing rubber for run flat tires, the modified conjugated diene-based rubber in the rubber component is made of only the amine-modified butadiene rubber.

### (Modifying Group of Amine-Modified Butadiene Rubber)

As for the amine-modified butadiene rubber, its amine-based functional group for modification is preferably a primary amino group or a secondary amino group; more preferably one into which a primary amino group protected with a removable group or a secondary amino group protected with a removable group is introduced; and still more preferably one into which a silicon atom-containing functional group is further introduced in addition to the foregoing amino group.

Examples of the primary amino group protected with a removable group (also referred to as "protected primary amino group") include a N,N-bis(trimethylsilyl)amino group, and examples of the secondary amino group protected with a removable group include a N,N-(trimethylsilyl)alkylamino group. The N,N-(trimethylsilyl)alkylamino group-containing group may be any of a non-cyclic residue and a cyclic residue.

Among the aforementioned amine-modified butadiene rubbers, a primary amine-modified butadiene rubber modified with a protected primary amino group is more suitable.

Examples of the silicon atom-containing functional group include a hydrocarbyloxysilyl group and/or a silanol group, in which a hydrocarbyloxy group and/or a hydroxy group is bonded to a silicon atom.

Such a functional group for modification is preferably one having an amino group protected with a removable group and at least one (e.g., one or two) silicon atom to which a hydrocarbyloxy group and a hydroxy group are bonded, preferably at the polymerization end, and more preferably at the same active polymerization end.

In order to allow an active end of the butadiene rubber to react with a protected primary amine to undergo the modification, the foregoing butadiene rubber is preferably one provided with living properties or pseudo-living properties in at least 10 % of polymer chains. Examples of the polymerization reaction proving such living properties include a reaction in which a conjugated diene compound alone or a conjugated diene compound and an aromatic vinyl compound are subjected to anionic polymerization in an organic solvent using an organic alkali metal compound as an initiator; and a reaction in which a conjugated diene compound alone or a conjugated diene compound and an aromatic vinyl compound are subjected to coordinate anionic polymerization in an organic solvent in the presence of a catalyst containing a lanthanum series rare earth element compound. The former is preferred because it can provide a polymer having a high vinyl bond content in the conjugated diene moiety as compared with that in the latter. The heat resistance can be enhanced by increasing the vinyl bond content.

### (Polymerization Initiator)

The organic alkali metal compound which is used as the initiator for the anionic polymerization is preferably an organic lithium compound. Although the organic lithium compound is not particularly limited, a hydrocarbyllithium and a lithium amide compound are preferably used. When the hydrocarbyllithium of the former is used, a butadiene rubber which has a hydrocarbyl group at a polymerization initiation end and in which the other end is a polymerization active site is obtained. In addition, when the lithium amide compound of the latter is used, a butadiene rubber which has a nitrogen-containing group at a polymerization initiation end and in which the other end is a polymerization active site is obtained.

The hydrocarbyllithium is preferably one having a hydrocarbyl group having 2 to 20 carbon atoms, and examples thereof include ethyllithium, n-propyllithium, isopropyllithium, n-butyllithium, sec-butyllithium, tert-octyllithium, n-decyllithium, phenyllithium, 2-naphthyllithium, 2-butylphenyllithium, 4-phenylbutyllithium, cyclohexyllithium, cyclopentyllithium, and a reaction product between diisopropenylbenzene and butyllithium, with n-butyllithium being especially suitable.

On the other hand, examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, and lithium methylphenethylamide. Among them, cyclic lithium amides, such as lithium hexamethyleneimide, lithium pyrrolidide, lithium piperidide, lithium heptamethyleneimide, and lithium dodecamethyleneimide are preferred from the standpoint of an interaction effect relative to the carbon black and a polymerization initiation ability, with lithium hexamethyleneimide and lithium pyrrolidide being especially suitable.

In general, though compounds prepared in advance from a secondary amine and a lithium compound can be used for such a lithium amide compound, they can be prepared as well in the polymerization system (in-Situ). In addition, the use amount of this polymerization initiator is selected preferably within a range of 0.2 to 20 mmol per 100 g of the monomer.

A method for producing the butadiene rubber through anionic polymerization using the aforementioned organic lithium compound as the polymerization initiator is not particularly limited, and conventionally known methods can be adopted.

Specifically, the targeted butadiene rubber having an active end is obtained by subjecting a conjugated diene compound or a conjugated diene compound and an aromatic vinyl compound to anionic polymerization in an organic solvent which is inert to the reaction, for example, a hydrocarbon-based solvent, such as an aliphatic, alicyclic, or aromatic hydrocarbon compound, by using the aforementioned lithium compound as the polymerization initiator in the presence of a randomizer which is used, if desired.

In addition, in the case of using the organic lithium compound as the polymerization initiator, not only the butadiene rubber having an active end but also the copolymer of the conjugated diene compound having an active end and the aromatic vinyl compound can be efficiently obtained, as compared with the case of using the aforementioned catalyst containing a lanthanum series rare earth element compound.

The hydrocarbon-based solvent is preferably a hydrocarbon having 3 to 8 carbon atoms, and examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. They may be used alone or may be used in admixture of two or more thereof.

A concentration of the monomer in the solvent is preferably 5 to 50% by mass, and more preferably 10 to 30% by mass. In the case of performing copolymerization using the conjugated diene compound and the aromatic vinyl compound, the content of the aromatic vinyl compound in the charged monomer mixture is preferably in a range of 55% by mass or less.

### (Modifying Agent)

In the present invention, a primary amine-modified butadiene rubber can be produced by allowing the active end of the butadiene rubber having an active end obtained as mentioned above to react with a protected primary amine compound as a modifying agent; and a secondary amine-modified butadiene rubber can be produced by allowing it to react with a protected secondary amine compound. The protected primary amine compound is suitably an alkoxysilane compound having a protected primary amino group, and the protected secondary amine compound is suitably an alkoxysilane compound having a protected secondary amino group.

Examples of the alkoxysilane compound having a protected primary amino group which is used as the modifying agent for obtaining the amine-modified butadiene rubber include N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, and N,N-bis(trimethylsilyl)aminoethylmethyldiethoxysilane, with N,N-bis(trimethylsilyl)aminopropylmethyldimethoxysilane, N,N-bis(trimethylsilyl)aminopropylmethyldiethoxysilane, or 1-trimethylsilyl-2,2-dimethoxy-1-aza-2-silacyclopentane being preferred.

In addition, examples of the modifying agent for obtaining the amine-modified butadiene rubber include alkoxysilane compounds having a protected secondary amino group, such as N-methyl-N-trimethylsilylaminopropyl(methyl)dimethoxysilane, N-methyl-N-trimethylsilylaminopropyl(methyl)diethoxysilane, N-trimethylsilyl(hexamethyleneimine-2-yl)propyl(methyl)dimethoxysilane, N-trimethylsilyl(hexamethyleneimine-2-yl)propyl(methyl)diethoxysilane, N-trimethylsilyl(pyrrolidin-2-yl)propyl(methyl)dimethoxysilane, N-trimethylsilyl(pyrrolidin-2-yl)propyl(methyl)diethoxysilane, N-trimethylsilyl(piperidin-2-yl)propyl(methyl)dimethoxysilane, N-trimethylsilyl(piperidin-2-yl)propyl(methyl)diethoxysilane, N-trimethylsilyl(imidazol-2-yl)propyl(methyl)dimethoxysilane, N-trimethylsilyl(imidazol-2-yl)propyl(methyl)diethoxysilane, N-trimethylsilyl(4,5-dihydroimidazol-5-yl)propyl(methyl)dimethoxysilane, and N-trimethylsilyl(4,5-dihydroimidazol-5-yl)propyl(methyl)diethoxysilane; alkoxysilane compounds having an imino group, such as N-(1,3-dimethylbutylidene)-3-(triethoxysilyl)-1-propanamine, N-(1-methylethylidene)-3-(triethoxysilyl)-1-propanamine, N-ethylidene-3-(triethoxysilyl)-1-propanamine, N-(1-methylpropylidene)-3-(triethoxysilyl)-1-propanamine, N-(4-N,N-dimethylaminobenzylidene)-3-(triethoxysilyl)-1-propanamine, and N-(cyclohexylidene)-3-(triethoxysilyl)-1-propanamine; and alkoxysilane compounds having an amino group, such as 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminoethyl(triethoxy)silane, 2-dimethylaminoethyl(trimethoxy)silane, 3-dimethylaminopropyl(diethoxy)methylsilane, and 3-dibutylaminopropyl(triethoxy)silane.

These modifying agents may be used alone or may be used in combination of two or more thereof. In addition, this modifying agent may also be a partial condensation product.

The partial condensation product as referred to herein refers to a compound in which a part (not all) of SiOR of the modifying agent (R is an alkyl group or the like) is converted into a SiOSi bond through condensation.

In the modification reaction owing to the modifying agent, the use amount of the modifying agent is preferably 0.5 to 200 mmol/kg·butadiene rubber. The use amount is more preferably 1 to 100 mmol/kg·butadiene rubber, and especially preferably 2 to 50 mmol/kg·butadiene rubber. The term "butadiene rubber" as referred to herein means a mass of the butadiene rubber alone which does not contain an additive, such as an anti-aging agent to be added during the production or after the production. By regulating the use amount of the modifying agent to the aforementioned range, excellent dispersibility of the filler, especially the carbon black is revealed, and rupture resistance characteristics and low heat generation property of the side reinforcing rubber for run flat tires are improved.

An addition method of the modifying agent is not particularly limited, and examples thereof includes a method in which it is added in one lot, a method in which it is added in a divided lot, and a method in which it is added continuously, with a method in which it is added in one lot being preferred.

Although the modifying agent can be bonded to any of a principal chain and a side chain of the polymer in addition to a polymerization initiating end and a polymerization finishing end thereof, it is preferably introduced into the polymerization initiating end or the polymerization finishing end from the standpoint that energy can be inhibited from disappearing from an end of the polymer to improve the low heat generation property.

### (Condensation Accelerator)

In the present invention, it is preferred to use a condensation accelerator for the purpose of accelerating a condensation reaction in which the alkoxysilane compound having a protected primary amino group to be used as the modifying agent participates.

As the condensation accelerator, a compound having a tertiary amino group, or an organic compound having at least one element belonging to any of the group 3, the group 4, the group 5, the group 12, the group 13, the group 14, and the group 15 in the periodic table (long-form periodic table) can be used. Furthermore, the condensation accelerator is preferably an alkoxide, a carboxylate, or an acetylacetonate complex salt, each of which contains at least one metal selected from the group consisting of titanium (Ti), zirconium (Zr), bismuth (Bi), aluminum (Al), and tin (Sn).

Although the condensation accelerator as used herein can be added before the modification reaction, it is preferably added to the modification reaction system on the way and/or after completion of the modification reaction. In the case where it is added before the modification reaction, there is a concern that a direction reaction with the active end occurs, so that the hydrocarbyloxy group having the protected primary amino group is not introduced into the active end.

An addition timing of the condensation accelerator is typically a period of 5 minutes to 5 hours after commencement of the modification reaction, preferably a period of 10 minutes to 1 hour after commencement of the modification reaction, and more preferably a period of 15 minutes to 1 hour after commencement of the modification reaction.

Specifically, examples of the condensation accelerator include compounds containing titanium, such as tetramethoxytitanium, tetraethoxytitanium, tetra-n-propoxytitanium, tetraisopropoxytitanium, tetra-n-butoxytitanium, a tetra-n-butoxytitanium oligomer, tetra-sec-butoxytitanium, tetra-tert-butoxytitanium, tetra(2-ethylhexyl)titanium, bis(octanedioleate)bis(2-ethylhexyl)titanium, tetra(octanedioleate)titanium, titanium lactate, titanium dipropoxybis(triethanolaminate), titanium dibutoxybis(triethanolaminate), titanium tributoxystearate, titanium tripropoxystearate, titanium ethylhexyldioleate, titanium tripropoxyacetylacetonate, titanium dipropoxybis(acetylacetonate), titanium tripropoxyethylacetoacetate, titanium propoxyacetylacetonatebis(ethylacetoacetate), titanium tributoxyacetylacetonate, titanium dibutoxybis(acetylacetonate), titanium tributoxyethylacetoacetate, titanium butoxyacetylacetonatebis(ethylacetoacetate), titanium tetrakis(acetylacetonate), titanium diacetylacetonatebis(ethylacetoacetate), bis(2-ethylhexanoate)titanium oxide, bis(laurate)titanium oxide, bis(naphthenate)titanium oxide, bis(stearate)titanium oxide, bis(oleate)titanium oxide, bis(linoleate)titanium oxide, tetrakis(2-ethylhexanoate)titanium, tetrakis(laurate)titanium, tetrakis(naphthenate)titanium, tetrakis(stearate)titanium, tetrakis(oleate)titanium, tetrakis(linoleate)titanium, and tetrakis(2-ethyl-1,3-hexanediolato)titanium.

In addition, examples of the condensation accelerator include compounds containing bismuth or zirconium, such as tris(2-ethylhexanoate)bismuth, tris(laurate)bismuth, tris(naphthenate)bismuth, tris(stearate)bismuth, tris(oleate)bismuth, tris(linoleate)bismuth, tetraethoxyzirconium, tetra-n-propoxyzirconium, tetraisopropoxyzirconium, tetra-n-butoxyzirconium, tetra-sec-butoxyzirconium, tetra-tert-butoxyzirconium, tetra(2-ethylhexyl)zirconium, zirconium tributoxystearate, zirconium tributoxyacetylacetonate, zirconium dibutoxybis(acetylacetonate), zirconium tributoxyethylacetoacetate, zirconium butoxyacetylacetonatebis(ethylacetoacetate), zirconium tetrakis(acetylacetonate), zirconium diacetylacetonatebis(ethylacetoacetate), bis(2-ethylhexanoate)zirconium oxide, bis(laurate)zirconium oxide, bis(naphthenate)zirconium oxide, bis(stearate)zirconium oxide, bis(oleate)zirconium oxide, bis(linoleate)zirconium oxide, tetrakis(2-ethylhexanoate)zirconium, tetrakis(laurate)zirconium, tetrakis(naphthenate)zirconium, tetrakis(stearate)zirconium, tetrakis(oleate)zirconium, and tetrakis(linoleate)zirconium.

In addition, examples of the condensation accelerator include compounds containing aluminum, such as triethoxyaluminum, tri-n-propoxyaluminum, triisopropoxyaluminum, tri-n-butoxyaluminum, tri-sec-butoxyaluminum, tri-tert-butoxyaluminum, tri(2-ethylhexyl)aluminum, aluminum dibutoxystearate, aluminum dibutoxyacetylacetonate, aluminum butoxybis(acetylacetonate), aluminum dibutoxyethylacetoacetate, aluminum tris(acetylacetonate), aluminum tris(ethylacetoacetate), tris(2-ethylhexanoate)aluminum, tris(laurate)aluminum, tris(naphthenate)aluminum, tris(stearate)aluminum, tris(oleate)aluminum, and tris(linoleate)aluminum.

Among the aforementioned condensation accelerators, titanium compounds are preferred, and an alkoxide of titanium metal, a carboxylate of titanium metal, or an acetylacetonate complex salt of titanium metal is especially preferred.

The use amount of the condensation accelerators is preferably 0.1 to 10, and especially preferably 0.5 to 5 in terms of a molar ratio of the molar number of the aforementioned compound to the total amount of the hydrocarbyloxy groups present in the reaction system. By regulating the use amount of the condensation accelerator to the aforementioned range, the condensation reaction is efficiently advanced.

The condensation reaction time is typically about 5 minutes to 10 hours, preferably about 10 minutes to 5 hours, and more preferably about 15 minutes to 5 hours. By regulating the condensation reaction time to the aforementioned range, the condensation reaction can be smoothly completed.

In addition, a pressure of the reaction system during the condensation reaction is typically 0.01 to 20 MPa, and preferably 0.05 to 10 MPa.

The content of the modified rubber in the rubber component is preferably 10 to 90% by mass, and more preferably 20 to 80% by mass.

### [Filler]

It is preferred that a carbon black is contained in the filler to be contained in the rubber composition of the present invention. The filler may be a carbon black alone or may contain a reinforcing inorganic filler, such as silica and clay, in addition to the carbon black. The carbon black is contained in an amount of preferably 50% by mass or more, more preferably 70% by mass or more, still more preferably 80% by mass or more, and especially preferably 90% by mass or more in the filler.

The carbon black in the filler which is contained in the rubber composition of the present invention has a nitrogen adsorption specific surface area of preferably 20 to 90 m²/g, more preferably 20 to 80 m²/g, and still more preferably 20 to 60 m²/g. In view of the fact that the nitrogen adsorption specific surface area of the carbon black falls within this range, the side reinforcing rubber for run flat tires is excellent in a balance between the reinforcement and the low heat generation property. The nitrogen adsorption specific surface area is measured on the basis of JIS K6217-2:2001.

The fact that a dibutyl phthalate oil absorption of the carbon black is 110 mL/100 g or more is preferred because the rigidity of the side reinforcing rubber for run flat tires is increased. The dibutyl phthalate oil absorption is preferably high as far as possible, and in general, it is preferably 160 mL/100 g or less. The dibutyl phthalate oil absorption is measured on the basis of JIS K6217-4:2008.

A carbon black having other characteristics than those mentioned above may also be further contained, as the need arises.

While there is a case where the aforementioned large-particle-diameter high-structure carbon black is used as a damping rubber material represented by an anti-vibration rubber, a seismic isolation rubber, and the like, the anti-vibration rubber is a soft rubber for not transmitting a vibration of an automobile engine into the inside of a car. Regarding that, the vulcanized rubber of the present invention is a rubber with a large elastic modulus such that a tensile elastic modulus during 25% elongation at 100°C is 1.2 MPa or more. In the case where the vulcanized rubber of the present invention is, for example, used for a side reinforcing rubber of a run flat tire, the side reinforcing rubber is a reinforcing member for supporting the running body of a car even under a high-compression pressure condition and under a high-temperature condition and is largely different from the anti-vibration rubber material with respect to the use environment and purpose. The anti-vibration rubber may also be grasped as a member for supporting an engine load. However, in the side reinforcing rubber, the engine load is a short-time input received from a passenger car running at a high speed under a severe condition, whereas in the anti-vibration rubber, it is a long-term input received from the engine under a relatively mild condition, and the both are quite different from each other.

From the viewpoint of achieving both the low heat generation property and the reinforcement of the side reinforcing rubber for run flat tires, which is a principal application of the rubber composition of the present invention, the content of the carbon black in the rubber composition is required to be 40 to 60 parts by mass based on 100 parts by mass of the rubber component, and it is preferably 42 to 60 parts by mass, more preferably 44 to 60 parts by mass, and still more preferably 45 to 60 parts by mass. When the content of the carbon black is 40 parts by mass or more based on 100 parts by mass of the rubber component, the durability during run flat running becomes favorable, and when it is 60 parts by mass or less, the riding comfort becomes favorable.

### [Vulcanizing Agent and Vulcanization Accelerator]

The rubber composition contains a vulcanizing agent. Sulfur is typically used as the vulcanizing agent. The content of the vulcanizing agent is preferably 3.0 to 6.0 parts by mass, more preferably 3.0 to 5.5 parts by mass, and still more preferably 3.5 to 5.5 parts by mass in terms of a sulfur component based on 100 parts by mass of the rubber component. Sulfur is preferred as the vulcanizing agent. Examples of other vulcanizing agent than sulfur include morpholine disulfide.

In order to accelerate the vulcanization of the rubber component, it is preferred that the rubber composition contains a vulcanization accelerator, and from the viewpoint of enhancing the durability, it is preferred that the content of the monosulfide of the rubber composition after vulcanization is increased to regulate the polysulfide ratio to 30% or less. From this viewpoint, the vulcanization accelerator according to the present invention is one containing a thiuram-based vulcanization accelerator.

The side chain carbon number of the thiuram-based vulcanization accelerator is preferably 4 or more, more preferably 6 or more, and still more preferably 8 or more. In view of the fact that the side chain carbon number is 4 or more, dispersion of the thiuram-based vulcanization accelerator in the rubber composition is excellent, and a uniform crosslinking network is readily constituted.

Examples of the thiuram-based vulcanization accelerator having the side chain carbon number of 4 or more include tetrakis(2-ethylhexyl)thiuram disulfide, tetrakis(n-dodecyl)thiuram disulfide, tetrakis(benzyl)thiuram disulfide, tetrabutylthiuram disulfide, dipentamethylenethiuram tetrasulfide, and tetrabenzylthiuram disulfide. Above all, tetrakis(2-ethylhexyl)thiuram disulfide is preferred.

The vulcanization accelerator to be contained in the rubber composition of the present invention contains the thiuram-based vulcanization accelerator, and a mass ratio of the thiuram-based vulcanization accelerator to the content of the sulfur component in the vulcanizing agent to be used in the rubber composition [(content of thiuram-based vulcanization accelerator)/(content of sulfur component in vulcanizing agent)] is 0.4 to 1.2, preferably 0.5 to 1.1, and more preferably 0.6 to 1.1.

Since the vulcanization accelerator is higher in polarity than the rubber component, the vulcanization accelerator is occasionally deposited from the surface of the rubber component (blooming phenomenon). In order that the vulcanized rubber may obtain the predetermined elastic modulus, it is required to add a large quantity of the vulcanization accelerator. However, the blooming phenomenon can be suppressed by regulating the mass ratio [(content of thiuram-based vulcanization accelerator)/(content of sulfur component in vulcanizing agent)] to 0.4 to 1.2. Thus, an adhesion failure in processing of the unvulcanized rubber composition, an appearance failure of the final product, or the like can be suppressed.

In order that the run flat tire may suitably satisfy both of the riding comfort during normal running and the durability during the run flat running, it is important that in the rubber composition, the thiuram-based vulcanization accelerator is contained in an amount of 2.6 to 5.5 parts by mass based on 100 parts by mass of the rubber component. The thiuram-based vulcanization accelerator is contained in an amount of preferably 3.0 to 5.5 parts by mass, and more preferably 3.5 to 5.5 parts by mass. When the content of the thiuram-based vulcanization accelerator is 2.6 parts by mass or more, the durability during run flat running becomes favorable, and when it is 5.5 parts by mass or less, the riding comfort becomes favorable.

In order to obtain desired vulcanization torque and vulcanization rate, a vulcanization accelerator A other than the thiuram-based vulcanization accelerator, a vulcanization retarder, or the like may be used in combination.

When the thiuram-based vulcanization accelerator is contained in an amount of 2.6 to 5.5 parts by mass, and the vulcanization accelerator A other than the thiuram-based vulcanization accelerator is contained in an amount of 1.0 to 5.0 parts by mass, preferably 1.0 to 4.0 parts by mass, and more preferably 1.0 to 3.5 parts by mass based on 100 parts by mass of the rubber component, the elastic modulus of the rubber composition after vulcanization at a high temperature (for example, 180°C) can be more increased, and in the case of being applied for the side reinforcing rubber of the tire, deflection of the side wall of the tire can be suppressed.

Examples of the vulcanization accelerator A include a sulfenamide-based vulcanization accelerator, a thiazole-based vulcanization accelerator, a dithiocarbamate-based vulcanization accelerator, a xanthate-based vulcanization accelerator, a guanidine-based vulcanization accelerator, and a thiourea-based vulcanization accelerator. Of these, a sulfenamide-based vulcanization accelerator is preferred. Examples of the sulfenamide-based vulcanization accelerator include N-(tert-butyl)-2-benzothiazolyl sulfenamide, N-(tert-butyl)-di(benzothiazole)sulfenamide, N-oxydiethylene-2-benzothiazolyl sulfenamide, N-cyclohexyl-2-benzothiazolyl sulfenamide, and N,N-dicyclohexyl-2-benzothiazolyl sulfenamide. The vulcanization accelerator A is used at least alone.

By regulating the content of the thiuram-based vulcanization accelerator to 2.6 parts by mass or more, the content of the vulcanization accelerator other than the thiuram-based vulcanization accelerator to 1.0 part by mass or more, and the content of the sulfur component of the sulfur-containing vulcanizing agent to 3 parts by mass or more, the durability during run flat running can be made more favorable, and the riding comfort during normal running can be made more suitable.

In the rubber composition of the present invention, it is preferred that the vulcanization accelerator A other than the thiuram-based vulcanization accelerator is contained in an amount of less than that of the thiuram-based vulcanization accelerator.

In the rubber composition of the present invention, a Mooney viscosity (ML₁₊₄, 130°C) is preferably 40 to 100, more preferably 50 to 90, and still more preferably 60 to 85. In view of the fact that the Mooney viscosity falls within the aforementioned range, the physical properties of the side reinforcing rubber for run flat tires, inclusive of rupture resistance characteristics, can be sufficiently obtained without impairing the production processability.

### (Softener)

It is preferred that the rubber composition of the present invention does not contain a softener or contains the softener in an amount of 4.0 parts by mass or less based on 100 parts by mass of the rubber component. The softener is contained in an amount of more preferably 3.0 parts by mass or less, and still more preferably 1.0 part by mass or less based on 100 parts by mass of the rubber component, and it is especially preferred that the softener is not contained.

In the rubber composition of the present invention, in order to increase (enhance) the flexibility of the side reinforcing rubber and to enhance the riding comfort, the softener may be used as the need arises. In this case, it is preferred that the softener is contained in an amount of 0.01 parts by mass or more.

By making the content of the softener small or not containing the softener, a ratio of the elastic modulus at a high temperature (for example, 180°C) to the elastic modulus at room temperature can be increased, and in the case of being applied for the side reinforcing rubber of the tire, deflection of the side wall of the tire can be suppressed. From the viewpoint of enhancing the durability during this run flat running, it is preferred that the softener is not contained.

The softener according to the present invention is preferably at least one selected from a thermoplastic resin and an oil.

The thermoplastic resin may be any material so long as it is softened or becomes in a liquid form at the time of a high temperature, enhances the flexibility of the side reinforcing rubber, and enhances the riding comfort. For example, a tackifier (not including a curing agent), such as various petroleum-based resins, such as a C5-based petroleum resin (including a cyclopentadiene-based resin and a dicyclopentadiene-based resin), a C9-based petroleum resin, and a C5/C9 mixture-based petroleum resin, a terpene-based resin, a terpene-aromatic compound-based resin, a rosin-based resin, a phenol resin, and an alkylphenol resin, and the like are used.

The oil refers to a softener that is liquid at normal temperature, and examples thereof include various process oils, such as a paraffin-based oil, a naphthene-based oil, and an aromatic oil.

### (Thermosetting Resin)

It is preferred that the rubber composition of the present invention does not contain a thermosetting resin or contains the thermosetting resin in an amount of 1.0 part by mass or less based on 100 parts by mass of the rubber component. The thermosetting resin is contained in an amount of more preferably 0.5 parts by mass or less, and it is still more preferred that the thermosetting resin is not contained.

As the content of the thermosetting resin is small, the rubber composition of the present invention becomes soft, and a static vertical spring constant of the run flat tire using the rubber composition of the present invention becomes small, so that the riding comfort of the run flat tire becomes favorable.

In the case of containing the thermosetting resin, if desired, it is preferred that the thermosetting resin is contained in an amount of 0.01 parts by mass or more based on 100 parts by mass of the rubber component.

Examples of the thermosetting resin include resins, such as a phenol resin, a melamine resin, a urea resin, and an epoxy resin. Examples of the curing agent of the phenol resin include hexamethylene tetramine.

In the rubber composition of the present invention, a compounding agent which is mixed in a typical rubber composition and used can be contained together with the aforementioned components. Examples thereof include various compounding agents which are generally mixed, such as various fillers other than carbon black and silica (for example, talc and calcium carbonate), a silane coupling agent, a vulcanization acceleration aid, a vulcanization retarder, zinc oxide, stearic acid, a wax, an anti-aging agent, a compatibilizer, a workability improver, a lubricant, an ultraviolet absorber, a dispersant, and a homogenizing agent.

As the anti-aging agent, known anti-aging agents can be used and are not particularly limited. Examples thereof include a phenol-based anti-aging agent, an imidazole-based anti-aging agent, and an amine-based anti-aging agent. The mixing amount of such an anti-aging agent is typically 0.5 to 10 parts by mass, and preferably 1 to 5 parts by mass based on 100 parts by mass of the rubber component.

On the occasion of obtaining the rubber composition, a mixing method of the aforementioned respective components is not particularly limited, and all of the component raw materials may be successively mixed and kneaded in one step by using an open roll. However, it is preferred to perform kneading in plural kneading steps including, after a master batch kneading step of kneading other raw materials than the vulcanizing agent and the vulcanization accelerator, a final kneading step of mixing the vulcanizing agent and the vulcanization accelerator. On the occasion of performing kneading, a kneading machine, such as a roll, an internal mixer, and a Banbury rotor, can be used. Furthermore, on the occasion of molding in a sheet-like form, a stripe-like form, or the like, a known molding machine, such as an extrusion molding machine and a press machine, may be used.

### <Tire and Run flat Tire>

The rubber composition of the present invention is preferably used for at least one member selected from a tire, particularly a side reinforcing rubber layer and a bead filler of the run flat tire.

An example of a structure of the run flat tire having a side reinforcing rubber layer is hereunder described by reference to Fig. 1.

Fig. 1 is a schematic view illustrating a cross section of an embodiment of the run flat tire according to the present invention and describes an arrangement of respective members constituting the run flat tire of the present invention, such as a side reinforcing rubber layer 8.

In Fig. 1, a suitable embodiment of the run flat tire of the present invention (hereinafter sometimes referred to simply as "tire") is a tire provided with a carcass layer 2 which is ranged toroidally over a space between a pair of bead cores 1 and 1' (1' is not illustrated) and which is formed of at least one radial carcass ply rolling up the bead core 1 from an inside of the tire to an outside thereof at both end parts; a side rubber layer 3 which is arranged at an outside of a tire axial direction in a side region of the carcass layer 2 to form an outside section; a tread rubber layer 4 which is arranged at an outside of a tire diameter direction in a crown region of the carcass layer 2 to form a grounding section; a belt layer 5 which is arranged between the tread rubber layer 4 and the crown region of the carcass layer 2 to form a reinforcing belt; an inner liner 6 which is arranged on the whole surface of the carcass layer 2 at an inside of the tire to form an air proof film; a bead filler 7 which is arranged between a main body portion of the carcass layer 2 extending from one bead core 1 to the other bead core 1' and a roll-up portion rolled up on the bead core 1; and at least one side reinforcing rubber layer 8 which is arranged between the carcass layer 2 and the inner liner 6 from the bead filler 7 side section to a shoulder zone 10 in a side region of the carcass layer and in which a cross-sectional shape along a rotational axis of the tire is approximately lunate.

The run flat tire according to the present invention using the rubber composition of the present invention for at least one member selected from the side reinforcing rubber layer 8 and the bead filler 7 is excellent in durability life.

Although the carcass layer 2 of the tire is formed of at least one carcass ply, the carcass ply may also be formed of two or more sheets thereof. In addition, the reinforcing cord of the carcass ply can be arranged at an angle of substantially 90° against the circumferential direction of the tire, and an embedded count of the reinforcing cord can be 35 to 65 pieces/50 mm. In addition, the belt layer 5 formed of two layers of a first belt layer and a second belt layer is arranged outside the crown region of the carcass layer 2 in the radial direction of the tire. However, the number of layers in the belt layer 5 is not limited thereto. As for the first belt layer and the second belt layer, those in which plural steel cords arranged in parallel in the width direction of the tire without being twisted together are embedded in the rubber can be used. For example, by arranging the first belt layer and the second belt layer so as to cross each other between the layers, a crossed belt may be formed.

Furthermore, outside the belt layer 5 in the radial direction of the tire, a belt reinforcing layer (not illustrated in the drawing) may be further arranged. The reinforcing cord of the belt reinforcing layer is preferably made from a highly elastic organic fiber for the purpose of securing the tensile rigidity in the circumferential direction of the tire. Organic fiber cords made of an aromatic polyamide (aramid), polyethylene naphthalate (PEN), polyethylene terephthalate, rayon, ZYLON (a registered trademark) (polyp-phenylenebenzobisoxazole (PBO) fiber), an aliphatic polyamide (nylon), or the like can be used as the organic fiber cord.

Furthermore, in the tire, besides the side reinforcing layer, a reinforcing member not illustrated in the drawing, such as an insert and a flipper, may be arranged. Here, the insert is a reinforcing material using plural highly elastic organic fiber cords placed side by side and coated with rubber, so as to be arranged from the bead section 3 to the side section 2 in the circumferential direction of the tire (not illustrated in the drawing). The flipper is a reinforcing material made of plural highly elastic organic fiber cords placed side by side and coated with rubber; arranged between the main body portion of the carcass ply extending between the bead core 1 and 1' and, a folding portion of the carcass ply folded around the bead core 1 or 1'; involving bead core 1 or 1', and at least a part of the bead filler 7 arranged outside thereof in the radial direction of the tire. The angle of the insert and the flipper is preferably 30 to 60° to the circumferential direction.

The tire of the present invention has a pair of bead sections in which the bead cores 1 and 1' are embedded, respectively. The carcass layer 2 is folded around the bead cores 1 and 1' from the inside to the outside of the tire so as to be engaged. A method for engaging the carcass layer 2 is not limited thereto. For example, at least one carcass ply of the carcass plies constituting the carcass layer 2 may be folded around the bead cores 1 and 1' from the inside toward the outside in the tire width direction, so as to form a so-called envelope structure in which the folded end is positioned between the belt layer 5 and the crown portion of the carcass layer 2. Furthermore, a tread pattern may be appropriately formed on the surface of the tread rubber layer 4, and the inner liner 6 may be formed in the innermost layer. In the tire, a gas, such as normal air or air in which a partial oxygen pressure has been changed, or an inert gas, such as nitrogen, can be used as the gas to be filled in the tire.

### (Preparation of Tire)

The tire according to the present invention, particularly the run flat tire is produced by a conventional method for producing a run flat tire, except for using the rubber composition of the present invention for at least one member selected from the side reinforcing rubber layer 8 and the bead filler 7.

That is, the rubber composition containing the above-described ingredients to be mixed is processed into the respective members in an unvulcanization state, and the members are stuck and molded on a tire molding machine by a conventional method, thereby molding a green tire. The green tire is heated and pressurized in a vulcanizing machine to obtain a run flat tire.

### Examples

### <Examples 1, 3, 4, and 6 and Comparative Examples 1 and 3>

### [Preparation of Rubber Composition]

Respective components were kneaded in a mixing formulation shown in the following Table 1, thereby preparing six kinds of rubber compositions.

A modified butadiene rubber used for the preparation of the rubber composition was produced by the following methods.

### [Production of Primary Amine-Modified Butadiene Rubber P]

### (1) Production of Unmodified Polybutadiene

A 5-liter autoclave purged with nitrogen was charged with 1.4 kg of cyclohexane, 250 g of 1,3-butadiene, and 2,2-ditetrahydrofurylpropane (0.285 mmol) in the form of a cyclohexane solution under nitrogen, and after 2.85 mmol of n-butyllithium (BuLi) was added thereto, polymerization was performed for 4.5 hours in a warm water bath of 50°C equipped with a stirring device. A reaction conversion rate of 1,3-butadiene was almost 100%. Apart of this polymer solution was put in a methanol solution containing 1.3 g of 2,6-di-tert-butyl-p-cresol, to terminate the polymerization, and then, the solvent was removed by steam stripping. The residue was dried on a roll of 110°C to obtain polybutadiene before modification. The obtained polybutadiene before modification was measured with respect to a micro structure (vinyl bond content). As a result, the vinyl bond content was 30% by mass.

### (2) Production of Primary Amine-Modified Butadiene Rubber P

The polymer solution obtained in the above (1) was maintained at a temperature of 50°C without deactivating the polymerization catalyst, and 1,129 mg (3.364 mmol) of N,N-bis(trimethylsilyl)aminopropylmethyldiethoxysilane in which a primary amino group thereof was protected was added thereto, to perform a modification reaction for 15 minutes.

Thereafter, 8.11 g of tetrakis(2-ethyl-1,3-hexanediolato)titanium that is a condensation accelerating agent was added, and the contents were further stirred for 15 minutes.

Finally, to the polymer solution after the reaction, 242 mg of silicon tetrachloride as a metal halide compound was added, and 2,6-di-tert-butyl-p-cresol was added. Subsequently, desolvation and deprotection of the protected primary amino group were performed by steam stripping, and the rubber was dried with a hot roll controlled at a temperature of 110°C, to obtain a primary amine-modified butadiene rubber P.

The obtained primary amine-modified butadiene rubber P was measured with respect to a micro structure (vinyl bond content). As a result, the vinyl bond content was 30% by mass.

### [Production of Run Flat Tire]

Subsequently, the obtained six kinds of rubber compositions were each arranged in the side reinforcing rubber layer 8 and the bead filler 7 shown in Fig. 1, and passenger car radial run flat tires having a tire size of 255/65R18 were produced, respectively by the conventional method. A maximum thickness of the side reinforcing rubber layer of each of the prototype tires was set to 14.0 mm, and the shapes of the side reinforcing rubber layers were made identical with each other. The shapes of the bead fillers were made identical with each other. The riding comfort and the run flat durability of each of the prototype tires were evaluated by the following methods. The results are shown in Table 1.

### [Evaluation of Riding Comfort]

The riding comfort of the run flat tire was evaluated by the following method.

With respect to the riding comfort, using the six kinds of tires having a tire size of 255/65R18 (all having a maximum thickness of the side reinforcing rubber layer of 14.0 mm), a static vertical spring constant of each of the prototype tires was expressed in terms of an index while defining the static vertical spring constant of the tire of Comparative Example 1 as 100. The static vertical spring constant as referred to herein refers to a static vertical load necessary for giving a vertical deflection of 1 mm to the tire. As the static vertical spring constant is small, the impact received from the road surface is readily absorbed, and the riding comfort is favorable. Riding comfort: Index = [(Static vertical spring constant of each prototype tire)/(Static vertical constant of prototype tire of Comparative Example 1)] × 100

It is expressed that the smaller the index value, the more excellent the riding comfort performance.

### [Run Flat Durability]

Each of the test tires (radial tires having a tire size of 255/65R18) was subjected to drum-running (velocity: 80 km/h) in an inner pressure-unfilled state, and a drum-running distance until the tire became unable to run was defined as a run flat running distance, and the run flat durability was expressed in terms of an index while defining the run flat running distance of the run flat tire of Comparative Example 1 as 100. It is expressed that the larger the index, the more excellent the durability life of the run flat tire.Run flat durability: Index = {(Run flat running distance of each prototype tire)/(Run flat running distance of prototype tire of Comparative Example 1)] × 100

### <Examples 2 and 5 and Comparative Examples 2 and 4>

### [Preparation of Rubber Composition]

Respective components are kneaded in a mixing formulation shown in the following Table 1, thereby preparing four kinds of rubber compositions.

As the modified butadiene rubber to be used for the preparation of rubber composition, the aforementioned primary amine-modified butadiene rubber P is used.

### [Production of Run Flat Tire]

Subsequently, the obtained four kinds of rubber compositions are each arranged in the side reinforcing rubber layer 8 and the bead filler 7 shown in Fig. 1, and passenger car radial run flat tires having a tire size of 255/65R18 are produced, respectively by the conventional method. A maximum thickness of the side reinforcing rubber layer of each of the prototype tires is set to 14.0 mm, and the shapes of the side reinforcing rubber layers are made identical with each other. The shapes of the bead fillers are made identical with each other. The riding comfort and the run flat durability of each of the prototype tires are evaluated by the following methods. The results are shown in Table 1.

### [Evaluation of Riding Comfort]

The riding comfort of the run flat tire is evaluated by the following method.

With respect to the riding comfort, using the four kinds of tires having a tire size of 255/65R18 (all having a maximum thickness of the side reinforcing rubber layer of 14.0 mm), a static vertical spring constant of each of the prototype tires is expressed in terms of an index while defining the static vertical spring constant of the tire of Comparative Example 1 as 100. The static vertical spring constant refers to one as mentioned above. As the static vertical spring constant is small, the impact received from the road surface is readily absorbed, and the riding comfort is favorable.Riding comfort: Index = [(Static vertical spring constant of each prototype tire)/(Static vertical constant of prototype tire of Comparative Example 1)] × 100

It is expressed that the smaller the index value, the more excellent the riding comfort performance.

### [Run Flat Durability]

Each of the test tires (radial tires having a tire size of 255/65R18) is subjected to drum-running (velocity: 80 km/h) in an inner pressure-unfilled state, and a drum-running distance until the tire became unable to run is defined as a run flat running distance, and the run flat durability is expressed in terms of an index while defining the run flat running distance of the run flat tire of Comparative Example 1 as 100. It is expressed that the larger the index, the more excellent the durability life of the run flat tire.

**Table 1**

| Unit of mixing formulation: parts by mass | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| Mixing formulation of rubber composition | Natural rubber *1 | 30.0 | 30.0 | 30.0 | 40.0 | 30.0 | 50.0 | 30.0 | 30.0 | 30.0 | 30.0 |
| | Primary amine-modified butadiene rubber P *2 | 70.0 | 70.0 | 70.0 | 60.0 | 70.0 | 50.0 | 70.0 | 70.0 | 70.0 | 70.0 |
| | Carbon black 1 FEF *3 | 55.0 | 55.0 | 60.0 | 55.0 | 0.0 | 0.0 | 60.0 | 55.0 | 65.0 | 60.0 |
| | Carbon black 2 *4 | 0.0 | 0.0 | 0.0 | 0.0 | 60.0 | 60.0 | 0.0 | 0.0 | 0.0 | 0.0 |
| | Thermoplastic resin *5 | 0.0 | 0.0 | 0.0 | 0.0 | 0.0 | 0.0 | 2.0 | 2.0 | 2.0 | 0.0 |
| | Thermosetting resin *6 | 0.0 | 0.0 | 0.0 | 0.0 | 0.0 | 0.0 | 0.0 | 0.0 | 0.0 | 2.0 |
| | Curing agent *7 | 0.0 | 0.0 | 0.0 | 0.0 | 0.0 | 0.0 | 0.0 | 0.0 | 0.0 | 0.2 |
| | Stearic acid *8 | 1.0 | 1.0 | 1.0 | 1.0 | 1.0 | 1.0 | 1.0 | 1.0 | 1.0 | 1.0 |
| | Zinc oxide *9 | 5.0 | 5.0 | 5.0 | 5.0 | 5.0 | 5.0 | 5.0 | 5.0 | 5.0 | 5.0 |
| | Ant-aging agent *10 | 2.0 | 2.0 | 2.0 | 2.0 | 2.0 | 2.0 | 2.0 | 2.0 | 2.0 | 2.0 |
| | Thiuram-based vulcanization accelerator TOT *11 | 4.0 | 5.0 | 4.0 | 4.0 | 4.0 | 4.0 | 1.0 | 1.0 | 1.0 | 1.0 |
| | Sulfenamide-based vulcanization accelerator NS *12 | 3.0 | 3.0 | 3.0 | 3.0 | 3.0 | 3.0 | 3.0 | 3.0 | 3.0 | 3.0 |
| | Sulfur *13 | 4.0 | 5.0 | 4.0 | 4.0 | 4.0 | 4.0 | 4.5 | 4.5 | 4.5 | 4.5 |
| (Thiuram-based vulcanization accelerator)/(Sulfur) | | 1.00 | 1.00 | 1.00 | 1.00 | 1.00 | 1.00 | 0.22 | 0.22 | 0.22 | 0.22 |
| Riding comfort: Index | | 97 | 98 | 98 | 97 | 98 | 96 | 100 | 98 | 102 | 102 |
| Run flat durability: Index | | 109 | 187 | 161 | 102 | 235 | 200 | 100 | 76 119 | | 100 |

Details of the respective components shown in Table 1 are as follows.
*1: Natural rubber (NR): RSS#1
*2: Primary amine-modified butadiene rubber P: Modified butadiene rubber obtained in the production of the primary amine-modified butadiene rubber P as mentioned above
*3: Carbon black 1 FEF: N550, "ASAHI #60", manufactured by Asahi Carbon Co., Ltd. [nitrogen adsorption specific surface area: 40 m²/g, DBP oil absorption: 114 mL/100 g]
*4: Carbon black 2: "ASAHI #52", manufactured by Asahi Carbon Co., Ltd. [nitrogen adsorption specific surface area: 28 m²/g, DBP oil absorption: 128 mL/100 g]
*5: DCPD resin: Dicyclopentadiene-based petroleum resin, "QUINTONE 1105", manufactured by Zeon Corporation
*6: Phenol resin: "SUMILITE RESIN PR-50731", manufactured by Sumitomo Bakelite Co., Ltd.
*7: Hexamethylene tetramine: Manufactured by Wako Pure Chemical Industries, Ltd.
*8: Stearic acid: "STEARIC ACID 50S", manufactured by New Japan Chemical Co., Ltd.
*9: Zinc oxide: "ZINC OXIDE #3", manufactured by Hakusui Tech Co., Ltd.
*10: Anti-aging agent (6C): N-Phenyl-N'-(1,3-dimethylbutyl)-p-phenylenediamine, "NOCRAC 6C", manufactured by Ouchi Shinko Chemical Industrial Co., Ltd.
*11: Thiuram-based vulcanization accelerator TOT: Tetrakis(2-ethylhexyl)thiuram disulfide, "NOCCELER TOT-N", manufactured by Ouchi Shinko Chemical Industrial Co., Ltd.
*12: Sulfenamide-based vulcanization accelerator NS: N-(tert-Butyl)-2-benzothiazolyl sulfenamide, a trade name "SANCELER NS-G", manufactured by Sanshin Chemical Industry Co., Ltd.
*13: Sulfur: "POWDER SULFUR", manufactured by Tsurumi Chemical Industry Co., Ltd.

From Table 1, it is noted that the run flat tires of Examples 1, 3, 4, and 6 favorably achieved both of the riding comfort during normal running and the durability during the run flat running, as compared with the run flat tires of Comparative Examples 1 and 3.

In addition, from Table 1, it is noted that the run flat tires of Examples 2 and 5 favorably achieves both of the riding comfort during normal running and the durability during the run flat running, as compared with the run flat tires of Comparative Examples 2 and 4.

### Industrial Applicability

The rubber composition of the present invention is able to favorably achieve both of the riding comfort during normal running and the durability during the run flat running, and therefore, it is suitably used for run flat tires.

### Reference signs List

1: Bead core
2: Carcass layer
3: Side rubber layer
4: Tread rubber layer
5: Belt layer
6: Inner liner
7: Bead filler
8: Side reinforcing rubber layer
10: Shoulder zone

## Claims

1. A rubber composition comprising a rubber component, a filler, a vulcanizing agent, and a vulcanization accelerator, wherein the rubber component contains 50% by mass or more of a modified conjugated diene-based rubber; the filler contains a carbon black; and the vulcanization accelerator contains a thiuram-based vulcanization accelerator, the carbon black being contained in an amount of 40 to 60 parts by mass, and the thiuram-based vulcanization accelerator being contained in an amount of 2.6 to 5.5 parts by mass based on 100 parts by mass of the rubber component,
wherein a mass ratio of the content of the thiuram-based vulcanization accelerator to the content of a sulfur component in the vulcanizing agent [(content of thiuram-based vulcanization accelerator)/(content of sulfur component in vulcanizing agent)] is 0.4 to 1.2, and
wherein the modified conjugated diene-based rubber is an amine-modified butadiene rubber.

2. The rubber composition according to claim 1, wherein the rubber composition does not contain a softener or contains the softener in an amount of 4.0 parts by mass or less based on 100 parts by mass of the rubber component.

3. The rubber composition according to claim 1 or 2, wherein the rubber composition further comprises a vulcanization accelerator A other than the thiuram-based vulcanization accelerator, and the vulcanization accelerator A is contained in an amount of 1.0 to 5.0 parts by mass based on 100 parts by mass of the rubber component.

4. The rubber composition according to any one of claims 1 to 3, wherein a nitrogen adsorption specific surface area of the carbon black is 20 to 90 m²/g, as measured according to JIS K6217-2:2001.

5. The rubber composition according to any one of claims 1 to 4, wherein a modifying group of the amine-modified butadiene rubber is a primary amino group.

6. The rubber composition according to any one of claims 1 to 5, wherein the rubber composition does not comprise a thermosetting resin or comprises the thermosetting resin in an amount of 1.0 part by mass or less based on 100 parts by mass of the rubber component.

7. The rubber composition according to claim 6, wherein the rubber composition does not contain the thermosetting resin.

8. A tire using the rubber composition according to any one of claims 1 to 7 for at least one member selected from a side reinforcing rubber layer and a bead filler.

## Patentansprüche

1. Kautschukzusammensetzung, die eine Kautschukkomponente, einen Füllstoff, ein Vulkanisiermittel und einen Vulkanisationsbeschleuniger umfasst, wobei die Kautschukkomponente 50 Masse-% oder mehr eines Kautschuks auf Basis von modifiziertem konjugiertem Dien enthält, der Füllstoff ein Rußschwarz enthält und der Vulkanisationsbeschleuniger einen Vulkanisationsbeschleuniger auf Basis von Thiuram enthält, wobei das Rußschwarz in einer Menge von 40 bis 60 Masseanteilen enthalten ist, und wobei der Vulkanisationsbeschleuniger auf Basis von Thiuram in einer Menge von 2,6 bis 5,5 Masseanteilen auf der Grundlage von 100 Masseanteilen der Kautschukkomponente enthalten ist,
wobei ein Massenverhältnis des Gehalts des Vulkanisationsbeschleunigers auf Basis von Thiuram zu dem Gehalt einer Schwefelkomponente in dem Vulkanisiermittel [(Gehalt von Vulkanisationsbeschleuniger auf Basis von Thiuram)/(Gehalt von Schwefelkomponente in Vulkanisiermittel)] 0,4 bis 1,2 beträgt, und
wobei der Kautschuk auf Basis von modifiziertem konjugiertem Dien ein aminmodifizierter Butadienkautschuk ist.

2. Kautschukzusammensetzung nach Anspruch 1, wobei die Kautschukzusammensetzung keinen Weichmacher enthält oder den Weichmacher in einer Menge von 4,0 Masseanteilen oder weniger auf der Grundlage von 100 Masseanteilen der Kautschukkomponente enthält.

3. Kautschukzusammensetzung nach Anspruch 1 oder 2, wobei die Kautschukzusammensetzung ferner einen anderen Vulkanisationsbeschleuniger A als den Vulkanisationsbeschleuniger auf Basis von Thiuram umfasst und der Vulkanisationsbeschleuniger A in einer Menge von 1,0 bis 5,0 Masseanteilen auf der Grundlage von 100 Masseanteilen der Kautschukkomponente enthalten ist.

4. Kautschukzusammensetzung nach einem der Ansprüche 1 bis 3, wobei eine stickstoffadsorptionsspezifische Oberfläche des Rußschwarzes 20 bis 90 m²/g, wie nach JIS K6217-2:2001 gemessen, beträgt.

5. Kautschukzusammensetzung nach einem der Ansprüche 1 bis 4, wobei eine modifizierende Gruppe des aminmodifizierten Butadienkautschuks eine primäre Aminogruppe ist.

6. Kautschukzusammensetzung nach einem der Ansprüche 1 bis 5, wobei die Kautschukzusammensetzung kein wärmehärtbares Harz umfasst oder das wärmehärtbare Harz in einer Menge von 1,0 Masseanteil oder weniger auf der Grundlage von 100 Masseanteilen der Kautschukkomponente umfasst.

7. Kautschukzusammensetzung nach Anspruch 6, wobei die Kautschukzusammensetzung kein wärmehärtbares Harz enthält.

8. Reifen unter Verwendung der Kautschukzusammensetzung nach einem der Ansprüche 1 bis 7 für mindestens ein Element, das ausgewählt ist aus einer Seitenverstärkungskautschukschicht und einem Kernreiter.

## Revendications

1. Composition de caoutchouc comprenant un composant de caoutchouc, une charge, un agent vulcanisant et un accélérateur de vulcanisation, dans laquelle le composant de caoutchouc contient 50 % en masse ou plus d'un caoutchouc à base de diène conjugué modifié, la charge contient du noir de carbone, et l'accélérateur de vulcanisation contient un accélérateur de vulcanisation à base de thiurame, le noir de carbone étant contenu en une quantité de 40 à 60 parties en masse, et l'accélérateur de vulcanisation à base de thiurame étant contenu en une quantité de 2,6 à 5,5 parties en masse sur la base de 100 parties en masse du composant de caoutchouc,
dans laquelle un rapport en masse de la teneur de l'accélérateur de vulcanisation à base de thiurame à la teneur d'un composant sulfuré dans l'agent vulcanisant [(teneur de l'accélérateur de vulcanisation à base de thiurame)/(teneur du composant sulfuré dans l'agent vulcanisant)] est 0,4 à 1,2, et
dans laquelle le caoutchouc à base de diène conjugué modifié est un caoutchouc butadiène modifié par une amine.

2. Composition de caoutchouc selon la revendication 1, où la composition de caoutchouc ne contient pas d'agent de ramollissement ou contient l'agent de ramollissement en une quantité de 4,0 parties en masse ou moins sur la base de 100 parties en masse du composant de caoutchouc.

3. Composition de caoutchouc selon la revendication 1 ou 2, où la composition de caoutchouc comprend en outre un accélérateur de vulcanisation A autre que l'accélérateur de vulcanisation à base de thiurame, et l'accélérateur de vulcanisation A est contenu en une quantité de 1,0 à 5,0 parties en masse sur la base de 100 parties en masse du composant de caoutchouc.

4. Composition de caoutchouc selon l'une quelconque des revendications 1 à 3, dans laquelle une surface spécifique d'adsorption d'azote du noir de carbone est de 20 à 90 m²/g, telle que mesurée selon la norme JIS K6217-2:2001.

5. Composition de caoutchouc selon l'une quelconque des revendications 1 à 4, dans laquelle un groupe modificateur du caoutchouc butadiène modifié par une amine est un groupe amino primaire.

6. Composition de caoutchouc selon l'une quelconque des revendications 1 à 5, où la composition de caoutchouc ne comprend pas de résine thermodurcissable ou comprend la résine thermodurcissable en une quantité de 1,0 partie en masse ou moins sur la base de 100 parties en masse du composant de caoutchouc.

7. Composition de caoutchouc selon la revendication 6, où la composition de caoutchouc ne contient pas de résine thermodurcissable.

8. Pneumatique utilisant la composition selon l'une quelconque des revendications 1 à 7 pour au moins un élément sélectionné parmi une couche de caoutchouc de renfort latéral et un bourrage sur tringle.
